# FASCICULE DE BREVET EUROPEEN

(11) **EP 3 530 444 B1**
(45) Date de publication et mention de la délivrance du brevet: **26.07.2023**
(21) Numéro de dépôt: 19158865.6
(22) Date de dépôt: 22.02.2019
(51) Int. Cl.: B64C 1/06, B29D 99/00, B29C 70/30

(54) **PROCEDE DE FABRICATION D'UN CAISSON CENTRAL DE VOILURE A PARTIR DE PROFILES REALISES PAR FORMAGE A PRESSION ELEVEE ET A BASSE TEMPERATURE ET CAISSON CENTRAL DE VOILURE OBTENU A PARTIR DE LA MISE EN OEUVRE DUDIT PROCEDE**
HERSTELLUNGSVERFAHREN EINES ZENTRALGEHÄUSES EINES FLÜGELS MITHILFE VON DURCH FORMPRESSVERFAHREN MIT HOHEM DRUCK UND NIEDRIGER TEMPERATUR HERGESTELLTEN PROFILEN, UND ZENTRALGEHÄUSE EINES FLÜGELS, DAS DURCH DIE UMSETZUNG DIESES VERFAHRENS ERHALTEN WURDE
METHOD FOR MANUFACTURING A CENTRAL BOX FOR WING FROM PROFILES MANUFACTURED BY HIGH PRESSURE AND LOW-TEMPERATURE FORMING AND CENTRAL BOX FOR WING OBTAINED FROM THE IMPLEMENTATION OF SAID METHOD

(30) Priorité: 22.02.2018 FR 1851500
(43) Date de publication de la demande: 28.08.2019
(73) Titulaire: Airbus Operations S.A.S., 31060 Toulouse (FR)
(72) Inventeur: PRIDIE, Jago, 44000 NANTES (FR)
(74) Mandataire: Jardel, Marc Henry Philippe

(56) Documents cités:
- EP-A1- 2 735 504
- WO-A1-2012/004490
- FR-A1- 2 986 990
- US-A1- 2015 166 743
- Anonymous: "Resin Transfer Molding - an overview | ScienceDirect Topics", , 1 June 2018 (2018-06-01), pages 1-10, XP055871845, Retrieved from the Internet: URL:https://www.sciencedirect.com/topics/e ngineering/resin-transfer-molding [retrieved on 2021-12-10]

## Description

La présente demande se rapporte à un procédé de fabrication d'un caisson central de voilure à partir de profilés réalisés par formage à pression élevée et à basse température.

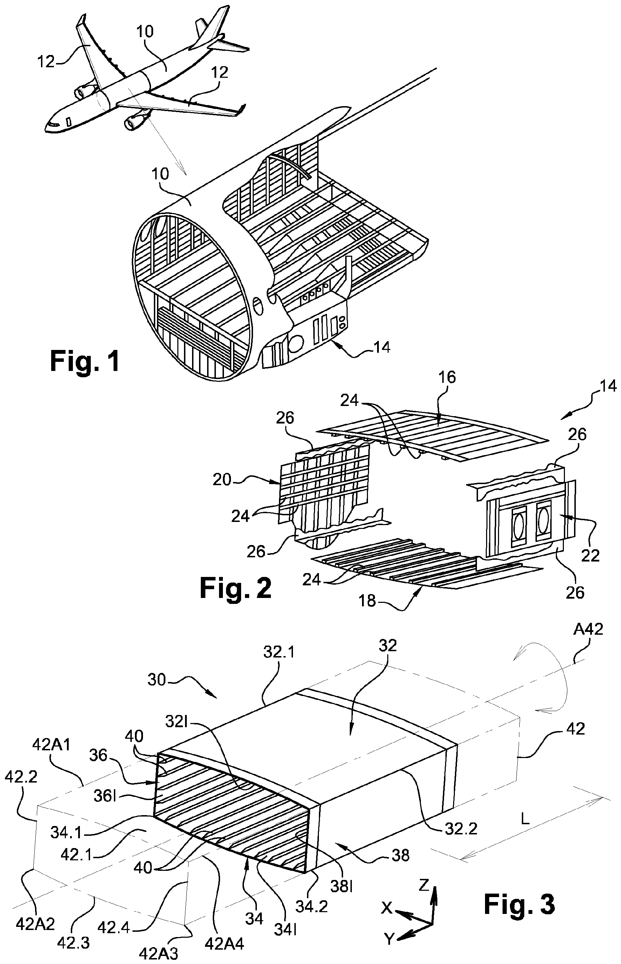

Comme illustré sur la figure 1, la structure d'un aéronef comprend un fuselage 10 et une voilure 12 reliés par l'intermédiaire d'un caisson central de voilure 14.

Selon un premier mode de réalisation illustré sur la figure 2, le caisson central de voilure 14 comprend un panneau supérieur 16, un panneau inférieur 18, un longeron avant 20 et un longeron arrière 22.

Pour la suite de la description, une surface ou une face interne correspond à une surface ou une face orientée vers l'intérieur du caisson central de voilure 14. A l'opposé, une surface ou une face externe correspond à une surface ou une face orientée vers l'extérieur du caisson central de voilure 14.

Chaque panneau ou longeron 16 à 22 est renforcé et comprend au niveau de sa face interne des raidisseurs 24.

Selon le premier mode de réalisation, les panneaux supérieur et inférieur 16, 18 et les longerons avant et arrière 20 et 22 sont réalisés indépendamment les uns des autres à partir d'éléments métalliques en alliage d'aluminium qui sont usinés de manière à former les raidisseurs 24. En suivant, les panneaux supérieur et inférieur 16, 18 et les longerons avant et arrière 20, 22 sont assemblés deux à deux à l'aide de cornières en L 26 de manière à former le caisson central de voilure 14.

Ces opérations d'assemblage sont longues et impactent de manière conséquente le coût du caisson central de voilure 14.

Le document WO-A1-2012/004490 divulgue un procédé de fabrication d'un caisson central de voilure d'un aéronef à partir d'une pluralité de profilés en U et en C en matériau composite et d'une peau externe de renforts fibreux formée sur les profilés en U et en C, les profilés en U présentant chacun une semelle et deux branches approximativement perpendiculaires à la semelle, les profilés en C présentant chacun une partie centrale en L et deux branches de part et d'autre de la partie centrale en L, le procédé de fabrication comprenant les étapes suivantes : - de dépose des profilés en U et en C juxtaposés tout autour d'un moule de sorte que les branches de deux profilés adjacents soient accolées l'une contre l'autre pour former un raidisseur positionné dans l'une des rainures du moule et que les semelles et les parties centrales en L des profilés en U et en C soient plaquées contre le moule , - de dépose de la peau externe sur des faces externes des semelles et des parties centrales en L des profilés en U et en C , - de polymérisation , et - de démoulage, le procédé de fabrication du caisson central de voilure comportant une étape de formage à une pression supérieure ou égale à 7 bars et à une température inférieure ou égale à 90°C.

Selon un deuxième mode de réalisation décrit dans le document EP2590856, le caisson central de voilure est réalisé en matériau composite en déposant des renforts fibreux autour d'un noyau ou d'un moule présentant quatre faces et une section identique à celle du caisson central de voilure. Pour obtenir les raidisseurs, des profilés en matériau composite présentant une section en U au niveau des faces du moule et une section en C au niveau de chaque arête du moule sont disposés tout autour du moule. Chaque profilé en U comprend une semelle et deux branches approximativement perpendiculaires à la semelle. Chaque profilé en C comprend une partie centrale en L et deux branches de part et d'autre de la partie centrale en L.

Les profilés en U et en C sont juxtaposés de sorte que les branches de deux profilés adjacents soient accolées l'une contre l'autre pour former un raidisseur et que les semelles et les parties centrales en L des profilés soient plaquées contre le moule.

A cet effet, le moule comprend pour chaque raidisseur une rainure dans chacune desquelles sont positionnées deux branches accolées de deux profilés adjacents.

En suivant, des renforts fibreux sont déposés, par enroulement par exemple, sur les semelles et les parties centrales en L des profilés en U et en C.

A l'issue de la mise en place des renforts fibreux, l'ensemble constitué par les profilés et les renforts fibreux est polymérisé.

Selon ce deuxième mode de réalisation, la géométrie des panneaux supérieur et inférieur 16, 18 et des longerons avant et arrière 20 et 22 est étroitement liée à la maîtrise de :
- l'épaisseur de la semelle ou de la partie centrale en L de chaque profilé,
- la géométrie et l'état de surface de la face externe de la semelle ou de la partie centrale en L de chaque profilé.

De plus, les caractéristiques mécaniques du caisson central de voilure sont également liées à celles des profilés en U et en C qui ne doivent pas présenter de porosité.

Le document EP2334486 propose un procédé de fabrication d'un profilé en U. Selon ce document, dans un premier temps, une préforme est réalisée en empilant des nappes de fibres sur un mandrin présentant une section en U. En suivant, la préforme est positionnée entre un moule et un contre-moule pour être imprégnée de résine et polymérisée à température élevée. Enfin, la préforme est compactée sous vide à une température élevée de l'ordre de 100 à 150°C, pour éviter des défauts au niveau des angles du profilé.

Lors de ce procédé de fabrication de nombreuses bulles d'air sont emprisonnées entre les nappes de fibres, rendant le profilé poreux.

La présente invention vise à remédier aux inconvénients de l'art antérieur.

A cet effet, l'invention a pour objet un procédé de fabrication d'un caisson central de voilure d'un aéronef à partir d'une pluralité de profilés en U et en C en matériau composite et d'une peau externe de renforts fibreux formée sur les profilés en U et en C, les profilés en U présentant chacun une semelle et deux branches approximativement perpendiculaires à la semelle, les profilés en C présentant chacun une partie centrale en L et deux branches de part et d'autre de la partie centrale en L,
le procédé de fabrication comprenant les étapes suivantes :
- de dépose des profilés en U et en C juxtaposés tout autour d'un moule de sorte que les branches de deux profilés adjacents soient accolées l'une contre l'autre pour former un raidisseur positionné dans l'une des rainures du moule et que les semelles et les parties centrales en L des profilés en U et en C soient plaquées contre le moule,
- de dépose de la peau externe sur des faces externes des semelles et des parties centrales en L des profilés en U et en C,
- de polymérisation, et
- de démoulage.

Selon la divulgation, le procédé de fabrication du caisson central de voilure se caractérise en ce que les profilés en C et en U sont obtenus à partir d'un procédé comportant une étape de formage à une pression supérieure ou égale à 7 bars et à une température inférieure ou égale à 90°C.

Cette étape de formage, préalable à la cuisson, permet de réduire la porosité, de contrôler l'épaisseur des profilés en C et en U et in fine d'améliorer les caractéristiques mécaniques du caisson central de voilure obtenu.

Selon une autre caractéristique, les profilés en C et en U sont obtenus par un procédé de pultrusion présentant une étape de formage comportant une sous-étape de compression des renforts fibreux imprégnés de résine à une pression supérieure ou égale à 7 bars et à une température inférieure ou égale à 90°C.

Selon un mode opératoire, la sous-étape de compression est réalisée à une pression comprise entre 12 et 15 bars et/ou à une température de l'ordre de 65°C.

Selon une autre caractéristique, les profilés en C et en U sont obtenus à partir de renforts fibreux pré-imprégnés.

D'autres caractéristiques et avantages ressortiront de la description de l'invention qui va suivre, description donnée à titre d'exemple uniquement, en regard des dessins annexés parmi lesquels :
- La figure 1 est une partie d'un fuselage d'un aéronef qui comprend un caisson central de voilure,
- La figure 2 est une vue en perspective d'un caisson central de voilure avant son assemblage selon un premier mode de réalisation de l'art antérieur,
- La figure 3 est une vue en perspective d'un caisson central de voilure obtenu selon un mode de réalisation de l'invention,
- La figure 4 est une coupe d'un moule et de profilés rapportés sur le moule qui illustre un mode de réalisation de l'invention,
- La figure 5 est une vue en perspective d'un profilé en U qui illustre un mode de réalisation de l'invention,
- La figure 6 est une vue en perspective d'un profilé en C qui illustre un mode de réalisation de l'invention, et
- La figure 7 est un schéma représentant différents postes d'un dispositif de fabrication par pultrusion de profilés.

Comme illustré sur la figure 3, un caisson central de voilure 30 comprend un panneau supérieur 32, un panneau inférieur 34, un longeron avant 36 et un longeron arrière 38.

Le panneau supérieur 32 présente un bord avant 32.1 et un bord arrière 32.2 sensiblement parallèles. Le panneau inférieur 34 présente un bord avant 34.1 et un bord arrière 34.2 sensiblement parallèles. Les bords avants 32.1 et 34.1 des panneaux supérieur et inférieur 32, 34 sont reliés par le longeron avant 36 et les bords arrières 32.2 et 34.2 des panneaux supérieur et inférieur 32, 34 sont reliés par le longeron arrière 38.

Les longerons avant et arrière 36, 38 sont sensiblement plans et parallèles et sont perpendiculaires à une direction longitudinale X. Les bords avants et arrières 32.1, 34.1, 32.2, 34.2 des panneaux supérieur et inférieur 32, 34 sont parallèle à une direction transversale horizontale Y. La direction horizontale verticale Z est perpendiculaire aux directions X et Y.

La longueur d'un élément correspond à une dimension de l'élément prise parallèlement à la direction transversale horizontale Y.

Les panneaux supérieur et inférieur 32, 34 et les longerons avant et arrière 36, 38 ont tous sensiblement la même longueur L.

Les panneaux supérieur et inférieur 32, 34 ainsi que les longerons avant et arrière 36, 38 présentent chacun une face interne référencée respectivement 32l, 34l, 36l et 38l.

Les faces internes 32l, 34l, 36l et 38l des panneaux supérieur et inférieur 32, 34 et des longerons avant et arrière 36, 38 comprennent des raidisseurs 40 parallèles à la direction transversale horizontale Y.

Selon l'invention, le caisson central de voilure 30 est en matériau composite.

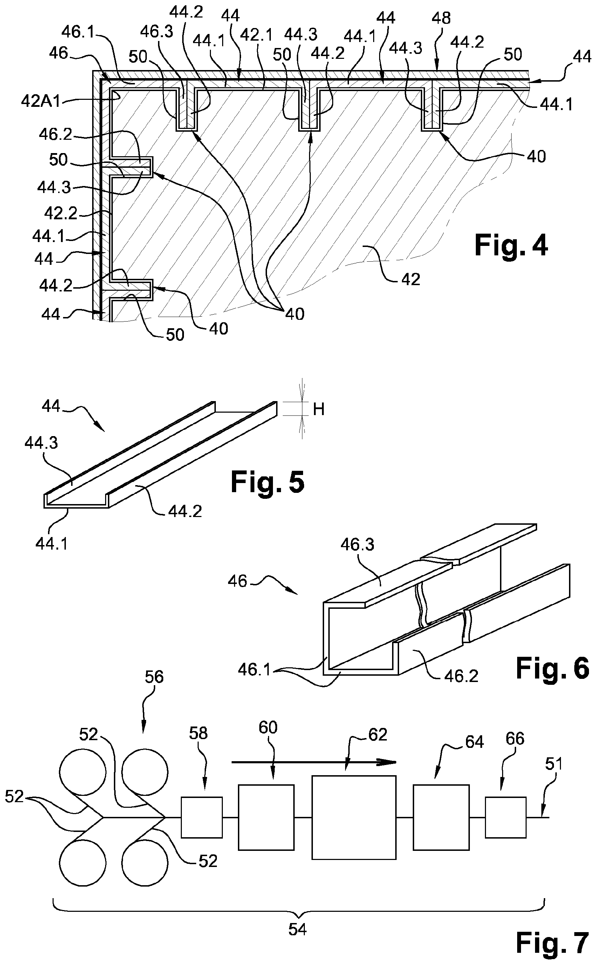

Comme illustré sur la figure 4, le caisson central de voilure 30 est obtenu à partir d'une pluralité de profilés en matériau composite 44, 46 sur lesquels une peau externe 48 est formée à partir de renforts fibreux. La pluralité de profilés en matériau composite 44, 46 sont positionnés autour d'un moule 42 (visible en partie sur la figure 3 en trait mixte et sur la figure 4 en coupe).

Par renfort fibreux, on entend au moins une fibre, un ensemble de fibres, une ou plusieurs mini-nappes de fibres ou une ou plusieurs nappes.

Le moule 42 comprend quatre faces 42.1 à 42.4 reliées, deux à deux, au niveau de quatre arêtes 42.A1 à 42.A4 et agencées de la même manière que les faces internes 32l, 34l, 36l et 38l des panneaux supérieur et inférieur 32, 34 et des longerons avant et arrière 36, 38 du caisson central de voilure 30. Selon une configuration, le moule 42 présente un axe de pivotement A42 parallèle aux arêtes 42.A1 à 42.A4 et à la direction transversale horizontale Y pour permettre l'enroulement des renforts fibreux.

Le moule 42 comprend des rainures 50, parallèles aux arêtes 42.A1 à 42.A4, ménagées au niveau des faces 42.1 à 42.4 du moule 42, une rainure 50 pour chaque raidisseur 40.

Le caisson central de voilure 30 est obtenu à partir de profilés en U 44 positionnés parallèlement à l'axe de pivotement A42 au niveau des faces 42.1 à 42.4 du moule 42 et de profilés en C 46 positionnés parallèlement à l'axe de pivotement A42 au niveau de chacune des arêtes 42.A1 à 42.A4 du moule 42.

Comme illustré sur la figure 5, chaque profilé en U 44 comprend une semelle 44.1 et deux branches 44.2 et 44.3 approximativement perpendiculaires à la semelle 44.1.

Comme illustré sur la figure 6, chaque profilé en C 46 comprend une partie centrale en L 46.1 et deux branches 46.2, 46.3 de part et d'autre de la partie centrale en L 46.1.

Pour donner un ordre de grandeur, chaque profilé a une épaisseur de l'ordre de 4 à 6 mm et les branches des profilés 44, 46 ont une hauteur de l'ordre de 45 mm.

Les profilés en U et en C 44, 46 sont juxtaposés tout autour du moule 42 de sorte que les branches de deux profilés adjacents soient accolées l'une contre l'autre pour former un raidisseur 40 positionné dans l'une des rainures 50 du moule 42 et que les faces internes des semelles 44.1 et des parties centrales en L 46.1 soient plaquées contre le moule 42.

Après la mise en place des profilés en U et en C 44, 46 sur le moule 42, la peau externe 48 est déposée sur les faces externes des semelles 44.1 et des parties centrales en L 46.1. Selon un mode opératoire, la peau externe 48 est obtenue par un enroulement de renforts fibreux autour du moule 42 (qui pivote autour de l'axe de pivotement A42), à l'aide d'au moins une tête de dépose de fibres ou de mèches de fibres.

Après la mise en place de la peau externe 48, des systèmes de drainage et une enveloppe étanche appelée également vessie sont mises en place sur la peau externe 48, l'enveloppe étanche étant reliée de manière étanche au moule 42 de part et d'autre de la peau externe 48.

Avantageusement, le moule 42 est étanche et a une longueur supérieure à celle du caisson central de voilure 30 et s'étend de part et d'autre de ce dernier de manière à offrir de part et d'autre une surface de contact à la vessie.

Selon une première variante, la peau externe 48 est réalisée à partir d'éléments fibreux pré-imprégnés.

Selon une deuxième variante, la peau externe 48 est réalisée à partir d'éléments fibreux secs. Dans ce cas, on injecte ou on infuse une résine dans l'enceinte délimitée par le moule 42 étanche et la vessie.

L'ensemble formé par le moule 42, les profilés en U et en C 44, 46, la peau externe 48, les systèmes de drainage et la vessie est introduit dans un autoclave sous 7 bars et soumis à un cycle de polymérisation pour assurer la consolidation du caisson central de voilure 30 par polymérisation de la peau externe 48.

Selon une variante, la cohésion entre la peau externe 48 et les semelles 44.1 et les parties centrales 46.1 des profilés en C et en U 44, 46 peut être obtenue par collage, par co-cuisson ou par tout autre moyen.

Le caisson central de voilure ainsi formé est ensuite démoulé.

Les étapes de mise en place des profilés en C et en U 44, 46 sur le moule 42, des renforts fibreux pour former la peau externe 48 sur les semelles 44.1 et les parties centrales 46.1 des longerons en C et en U 44, 46, des systèmes de drainage, de l'enveloppe étanche ne sont pas plus décrites car elles sont connues de l'homme du métier.

Les profilés en C et en U 44, 46 sont obtenus par un procédé de pultrusion.

Pour réaliser un profilé 51 présentant une section souhaitée, le procédé de fabrication par pultrusion comprend une étape de formage qui comporte :
- une étape de conformation et d'imprégnation de résine en continu de renforts fibreux 52 secs qui sont agencés selon une géométrie conforme à la section souhaitée,
- une étape de compression des renforts fibreux 52 imprégnés de résine de manière à réduire la porosité, et
- une étape de cuisson afin d'obtenir en continu le profilé 51.

Selon un mode de réalisation visible sur la figure 7, un dispositif de pultrusion 54 comprend un poste d'alimentation 56 en renforts fibreux 52, un poste de conformation et d'imprégnation 58 configuré pour agencer les renforts fibreux 52 selon une géométrie de section souhaitée et les imprégner de résine, un poste de compression 60 configuré pour comprimer les renforts fibreux 52 imprégnés de résine, un poste de cuisson 62 configuré pour cuire les renforts fibreux 52 imprégnés et comprimés, un poste de traction 64 configuré pour tirer les renforts fibreux 52 en continu et un poste de découpe 66 configuré pour couper le profilé obtenu en sortie du poste de cuisson 62 selon une longueur souhaitée.

Selon un autre mode de réalisation, les renforts fibreux 52 sont pré-imprégnés. Dans ce cas, le procédé de pultrusion ne comprend pas d'étape d'imprégnation de résine et le dispositif de pultrusion ne comprend pas de poste d'imprégnation.

Selon une particularité de l'invention, l'étape de compression est réalisée à une pression élevée supérieure ou égale à 7 bars et à basse température inférieure ou égale à 90°C. Les valeurs de pression et de température sont ajustées en fonction du matériau. Par exemple, lorsque les renforts fibreux 52 utilisés sont des renforts fibreux commercialisés sous la référence TORAY^{®} 3911, l'étape de compression des renforts fibreux peut se faire à une pression comprise entre 12 et 15 bars et à une température inférieure ou égale à 90°C.

Avantageusement, l'étape de compression est réalisée à une température de l'ordre de 65°C. Cette solution permet de réduire la porosité avant l'étape de cuisson et de contrôler l'épaisseur des profilés en C et en U 44, 46.

A l'issue du procédé de pultrusion, les profilés en U et en C peuvent être totalement polymérisés ou partiellement polymérisés. Dans ce dernier cas, l'étape de cuisson doit être suffisante pour assurer une stabilité dimensionnelle et géométrique aux profilés en U et en C. Le fait de réaliser les profilés en U et en C 44, 46 par pultrusion permet de maîtriser parfaitement :
- l'épaisseur des semelles 44.1 et des parties centrales en L 46.1 des profilés en U et en C 44, 46,
- la géométrie et l'état de surface de leurs faces externes,
ce qui contribue à maîtriser la géométrie des panneaux supérieur et inférieur 32, 34 et des longerons avant et arrière 36, 38.

De plus, le fait de réduire la porosité des renforts en U et en C 44, 46 contribue à améliorer les caractéristiques mécaniques du caisson central de voilure obtenu.

Selon une variante de l'invention, la polymérisation sur le moule 42 peut s'effectuer dans un four à pression ambiante.

Selon une autre variante de l'invention, les renforts en U et en C 44, 46 peuvent être réalisés selon le procédé de fabrication décrit dans le document EP2334486 et comportant une étape de formage comprenant une sous-étape de compression des renforts fibreux, ladite sous-étape de compression étant effectuée à une température inférieure à 90°C et à une pression supérieure ou égale à 7 bars, préférentiellement entre 7 et 15 bars.

Selon une variante de l'invention, les renforts en U et en C 44, 46 peuvent être formés à partir d'un procédé dit de formage au diaphragme connu de l'homme du métier, ledit procédé comportant une étape de formage lors de laquelle les renforts en U et en C 44, 46 sont formés sur un diaphragme dans un autoclave, ladite étape de formage comportant une sous-étape de compression des renforts fibreux et étant effectuée dans un autoclave dont la température est maintenue à une température inférieure ou égale à 90°C et dont la pression est maintenue supérieure ou égale à 7 bars, préférentiellement entre 7 et 15 bars.

Selon un mode de réalisation le moule et/ou le diaphragme sont perforés permettant à l'air de s'échapper.

Selon un mode de réalisation, l'application de la pression dans l'autoclave est retardée et varie progressivement de 7 à 9 bars.

## Revendications

1. Procédé de fabrication d'un caisson central de voilure d'un aéronef à partir d'une pluralité de profilés en U et en C en matériau composite (44, 46) et d'une peau externe (48) de renforts fibreux formée sur les profilés en U et en C, les profilés en U présentant chacun une semelle (44.1) et deux branches (44.2, 44.3) approximativement perpendiculaires à la semelle (44.1), les profilés en C présentant chacun une partie centrale en L (46.1) et deux branches (46.2, 46.3) de part et d'autre de la partie centrale en L (46.1), le procédé de fabrication comprenant les étapes suivantes :
- de dépose des profilés en U et en C (44, 46) juxtaposés tout autour d'un moule (42) de sorte que les branches de deux profilés adjacents soient accolées l'une contre l'autre pour former un raidisseur (40) positionné dans l'une des rainures (50) du moule (42) et que les semelles (44.1) et les parties centrales en L (46.1) des profilés en U et en C (44, 46) soient plaquées contre le moule (42),
- de dépose de la peau externe (48) sur des faces externes des semelles (44.1) et des parties centrales en L (46.1) des profilés en U et en C (44, 46),
- de polymérisation, et
- de démoulage,
le procédé de fabrication du caisson central de voilure en ce que les profilés en C et en U (44, 46) sont obtenus à partir d'un procédé de pultrusion comportant une étape de formage à une pression supérieure ou égale à 7 bars et à une température inférieure ou égale à 90°C, l'étape de formage comportant une sous-étape de compression des renforts fibreux (52) imprégnés de résine à une pression comprise entre 12 et 15 bars et à une température inférieure ou égale à 90°C.

2. Procédé de fabrication d'un caisson central de voilure d'un aéronef selon la revendication précédente, **caractérisé en ce que** la sous-étape de compression est réalisée à une température de l'ordre de 65°C.

3. Procédé de fabrication d'un caisson central de voilure d'un aéronef selon l'une des revendications précédentes, **caractérisé en ce que** les profilés en C et en U (44, 46) sont obtenus à partir de renforts fibreux pré-imprégnés (52).

## Patentansprüche

1. Verfahren zur Herstellung eines zentralen Flügelkastens eines Luftfahrzeugs aus einer Vielzahl von U- und C-förmigen Profilen aus Verbundmaterial (44, 46) und einer Außenhaut (48) aus Faserverstärkungen, die auf den U- und C-förmigen Profilen ausgebildet ist, wobei die U-förmigen Profile jeweils eine Sohle (44.1) und zwei zur Sohle (44.1) ungefähr rechtwinklige Schenkel (44.2, 44.3) aufweisen, wobei die C-förmigen Profile jeweils einen L-förmigen Mittelteil (46.1) und jeweils einen Schenkel (46.2, 46.3) auf beiden Seiten des L-förmigen Mittelteils (46.1) aufweisen, wobei das Herstellungsverfahren die folgenden Schritte umfasst:
- Anordnen der U- und C-förmigen Profile (44, 46) nebeneinander rund um eine Form (42), sodass die Schenkel von zwei benachbarten Profilen aneinandergelegt werden, um eine Versteifung (40) zu bilden, die in einer der Rillen (50) der Form (42) positioniert ist, und sodass die Sohlen (44.1) und die L-förmigen Mittelteile (46.1) der U- und C-förmigen Profile (44, 46) an der Form (42) anliegen,
- Anordnen der Außenhaut (48) auf Außenseiten der Sohlen (44.1) und der L-förmigen Mittelteile (46.1) der U- und C-förmigen Profile (44, 46),
- Polymerisieren und
- Entformen,
wobei das Verfahren zur Herstellung des zentralen Flügelkastens **dadurch gekennzeichnet ist, dass** die C- und U-förmigen Profile (44, 46) aus einem Pultrusionsverfahren erhalten werden, das einen Formgebungsschritt bei einem Druck von 7 bar oder mehr und bei einer Temperatur von 90°C oder weniger umfasst, wobei der Formgebungsschritt einen Unterschritt des Komprimierens der mit Harz imprägnierten Faserverstärkungen (52) bei einem Druck zwischen 12 und 15 bar und bei einer Temperatur von 90°C oder weniger umfasst.

2. Verfahren zur Herstellung eines zentralen Flügelkastens eines Luftfahrzeugs nach dem vorangehenden Anspruch, **dadurch gekennzeichnet, dass** der Unterschritt des Komprimierens bei einer Temperatur im Bereich von 65°C erfolgt.

3. Verfahren zur Herstellung eines zentralen Flügelkastens eines Luftfahrzeugs nach einem der vorangehenden Ansprüche, **dadurch gekennzeichnet, dass** die C- und U-förmigen Profile (44, 46) aus vorimprägnierten Faserverstärkungen (52) erhalten werden.

## Claims

1. Method for manufacturing an aircraft central wing box from a plurality of composite-material U-sections and C-sections (44, 46) and from an external skin (48) of fibrous reinforcements formed on the U-sections and C-sections, the U-sections each having a web (44.1) and two flanges (44.2, 44.3) approximately perpendicular to the web (44.1), the C-sections each having an L-shaped central part (46.1) and two flanges (46.2, 46.3) one on each side of the L-shaped central part (46.1), the manufacturing method comprising the following steps:
- of placing the U-sections and C-sections (44, 46) juxtaposed all around a mould (42) so that the flanges of two adjacent sections lie back-to-back touching one another to form a stiffener (40) positioned in one of the slots (50) of the mould (42) and so that the webs (44.1) and the L-shaped central parts (46.1) of the U-sections and C-sections (44, 46) are pressed against the mould (42),
- of laying the external skin (48) over the external faces of the webs (44.1) and of the L-shaped central parts (46.1) of the U-sections and C-sections (44, 46),
- of polymerizing, and
- of releasing from the mould,
the method for manufacturing the central wing box being **characterized in that** the C-sections and U-sections (44, 46) are obtained using a pultrusion method that includes a step of forming at a pressure greater than or equal to 7 bar and at a temperature less than or equal to 90°C, the forming step comprising a substep of compressing the resin-impregnated fibrous reinforcements (52) at a pressure of between 12 and 15 bar and at a temperature less than or equal to 90°C.

2. Method for manufacturing an aircraft central wing box according to the preceding claim, **characterized in that** the compression substep is performed at a temperature of the order of 65°C.

3. Method for manufacturing an aircraft central wing box according to one of the preceding claims, **characterized in that** the C-sections and U-sections (44, 46) are obtained from preimpregnated fibrous reinforcements (52).
